# EUROPEAN PATENT APPLICATION

(11) **EP 1 882 842 A1**
(43) Date of publication of application: **30.01.2008**
(21) Application number: 06715011.0
(22) Date of filing: 01.03.2006
(51) Int. Cl.: F02K 9/60, B64G 1/26, F03G 6/00

(54) **HEAT TRANSFER THRUSTER**

(30) Priority: 02.03.2005 JP 2005057632
(71) Applicant: National University Corporation Hokkaido University, Sapporo-shi, Hokkaido 0600808 (JP)
(72) Inventor: TOTANI, Tsuyoshi, c/o Univ. Corp. Hokkaido Univ., Sapporo-shi, Hokkaido 060-8628 (JP); MURAKI, Yusuke, c/o Univ. Corp. Hokkaido Univ., Sapporo-shi, Hokkaido 060-8628 (JP); TAKANO, Chihiro, c/o Univ. Corp. Hokkaido Univ., Sapporo-shi, Hokkaido 060-8628 (JP)
(74) Representative: Schaeberle, Steffen
(86) International application number: PCT/JP2006/303894
(87) International publication number: WO 2006/093198

(57) **Abstract**

A heat transfer thruster by which performance can be enhanced by realizing optimal temperature distribution for heating propellant without complicating the structure. In the heat transfer thruster, propellant flows through two pipes (102, 104) into the thruster body (106) thence flows through a channel (110) formed in the thruster body (106) to the nozzle side while being heated from the thruster body (106) which is heated by a heat source, and reaches a plenum chamber (114) in front of a nozzle before being injected from a propellant outlet along the outer wall (126) of a plug nozzle (112). Heat from the heat source is transmitted directly to the nozzle through the inner wall (128) of the plug nozzle (112). In other words, the hollow section (118) of the plug nozzle (112) functions as a heating section for the nozzle.

## Description

### Technical Field

The present invention relates to a heat transfer thruster. More particularly, the present invention relates to a heat transfer thruster applied to solar thermal propulsion or a resistojet.

### Background Art

Generally, a rocket and a thruster obtain thrust by internally combusting a propellant, vaporizing the propellant into high temperature and high pressure gas and jetting out the gas from a nozzle. That is, in the rocket or the thruster, chemical energy of the propellant is converted into kinetic energy. In contrast with this, a heat transfer thruster differs from a thruster utilizing chemical reaction of a propellant, and is a propelling apparatus that obtains thrust by supplying heat from outside to a propellant, vaporizing the propellant into high temperature and high pressure gas and jetting out the gas from a nozzle. Propulsion methods of the heat transfer thruster, for example, include a solar thermal propulsion which heats a propellant by solar heat and a resistojet which heats a propellant using a heater such as a heating wire. A thruster which utilizes solar thermal propulsion is generally called a solar thermal thruster. In recent years, the solar thermal thruster attracts attention as a space thruster and an orbital maneuvering main thrust system. Liquid hydrogen, hydrazine or water is normally used as a propellant of the solar thermal thruster. The conventional heat transfer thrusters are disclosed in patent document 1, non-patent document 1 and non-patent document 2.

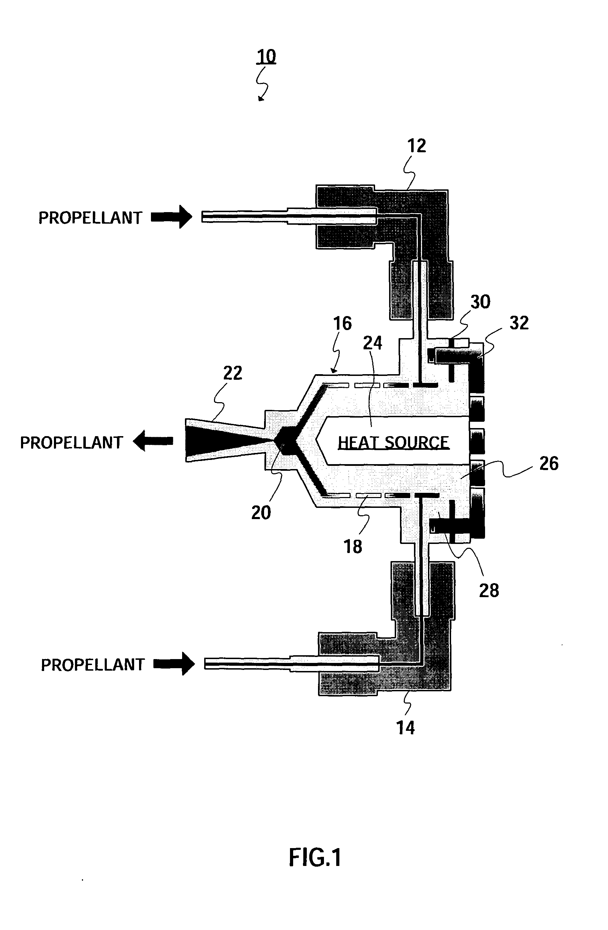

FIG. 1 is a schematic view (sectional view) showing one example of a structure of a conventional heat transfer thruster. In heat transfer thruster 10, a propellant flows into thruster body 16 through two pipes 12 and 14, flows toward a nozzle through spiral channel 18 formed in thruster body 16 while being heated by thruster body 16 which is heated by a heat source, reaches plenum chamber 20 before the nozzle, and then is jetted out from nozzle 22. In general, nozzle 22 has a bell shape or a cone shape, and is integrally formed with thruster body 16. At the central part of thruster body 16, cavity 24 is formed to which a heat source is provided. Sunlight or a heater is used as the heat source. Thruster body 16 is formed with inner body 26 and outer body 28, and adopts a configuration where gasket 30 is sandwiched between inner body 26 and outer body 28 and inner body 26 and outer body 28 are sealed by tightening connecting bolt 32.

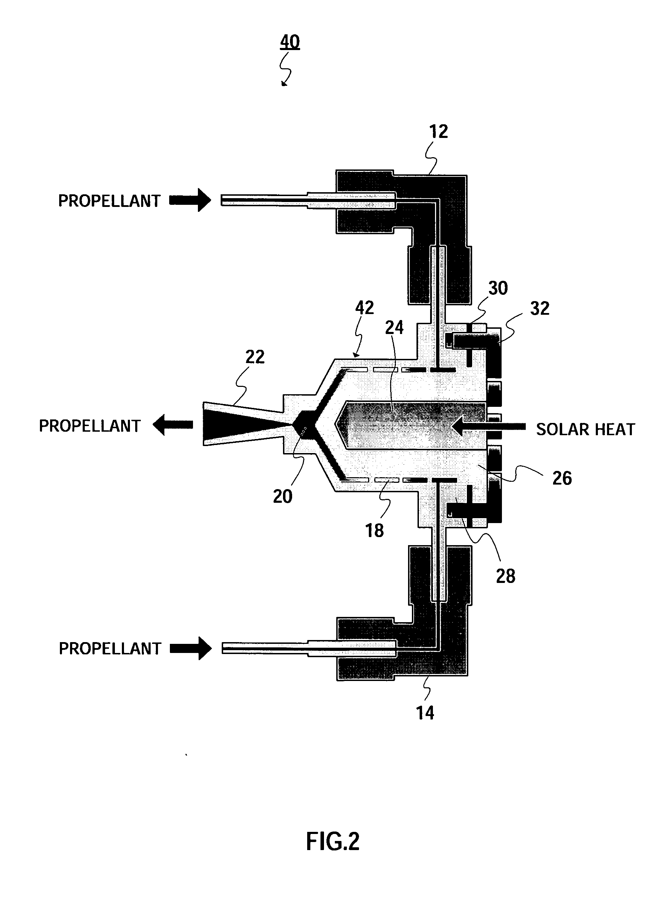

FIG. 2 is a schematic view (sectional view) showing one example of a structure of a conventional solar thermal thruster as a conventional heat transfer thruster. Especially in solar thermal thruster 40, by collecting sunlight in cavity 24 using a solar collector mirror (not shown) provided outside thruster body 42, thruster body 42 is heated.

In the heat transfer thruster, a propellant is heated from outside. Thus, in order to efficiently heat the propellant which flows in, it is necessary to always maintain a temperature of the heat transfer thruster from a propellant inlet to the plenum chamber higher than a temperature of the propellant. To that end, the temperature distribution of the heat transfer thruster is optimum where the temperature is the highest in the plenum chamber, the temperature becomes lower toward the propellant inlet and the temperature is the lowest in the propellant inlet. This is the same idea as "countercurrent" of a heat exchanger in which a heat flow and a propellant flow are opposed to each other.
Patent Document 1: Japanese Patent Application Laid-open No.2004-270552
Non-Patent Document 1: Kyouich KURIKI, Yoshihiro ARAKI, "Introduction to Electric propulsion", Tokyo University Press, 2003, p.184
Non-Patent Document 2: H. Shimizu, et al. , "Single Crystal Mo Solar Thermal Thruster for Microsatellites", IAF-98-S.6.01, 1998, p.2

### Disclosure of Invention

### Problems to be Solved by the Invention

In the conventional heat transfer thruster having a bell-shaped or cone-shaped nozzle, there is a problem that the temperature in the plenum chamber is low, the optimal temperature distribution for heating a propellant can not be realized and therefore desired performance cannot be exhibited.

The present inventors carried out a heat transfer analysis of a solar thermal thruster using water as a propellant based on an experiment and a numerical analysis. As a result, it is found that the solar thermal thruster having the conventional structure (particularly, the structure having the bell-shaped or cone-shaped nozzle and a heat source in a cavity) cannot realize the above optimum temperature distribution no matter what heating and flow rate conditions are employed.

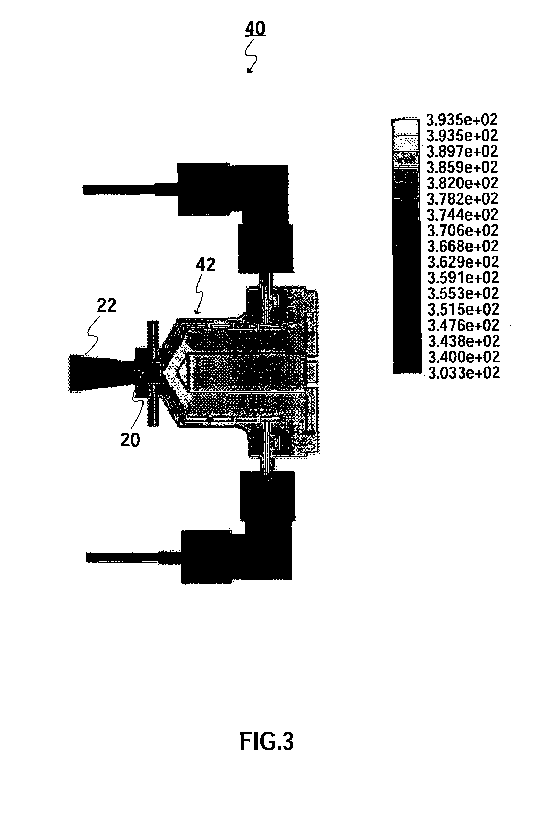

FIG.3 shows one example of the numerical analysis result of the temperature distribution of solar thermal thruster 40 shown in FIG.2. The unit of numbers in FIG.3 is K (Kelvin). As shown in FIG.3, in the temperature distribution of the conventional solar thermal thruster 40, the temperature of plenum chamber 20 is low. That is, as for thruster body 42, the actual temperature distribution is not the above optimum temperature distribution. This reason will be described by paying attention to flows of a propellant and heat in the solar thermal thruster.

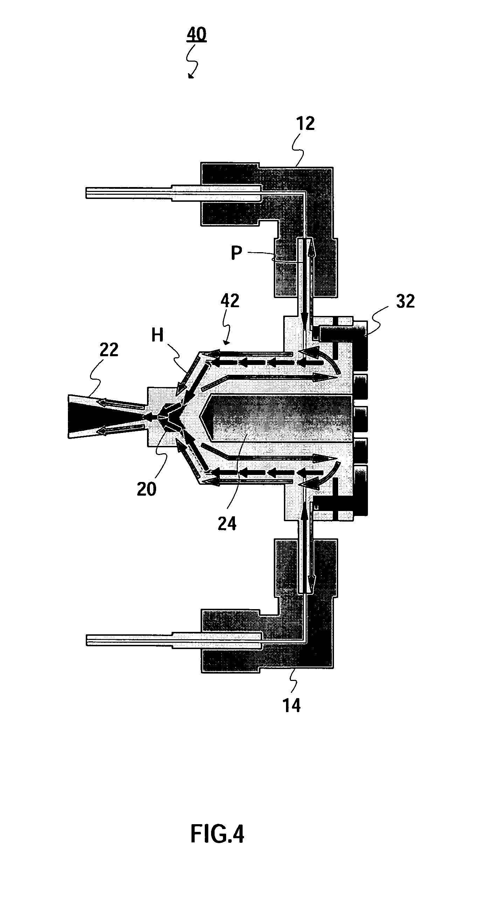

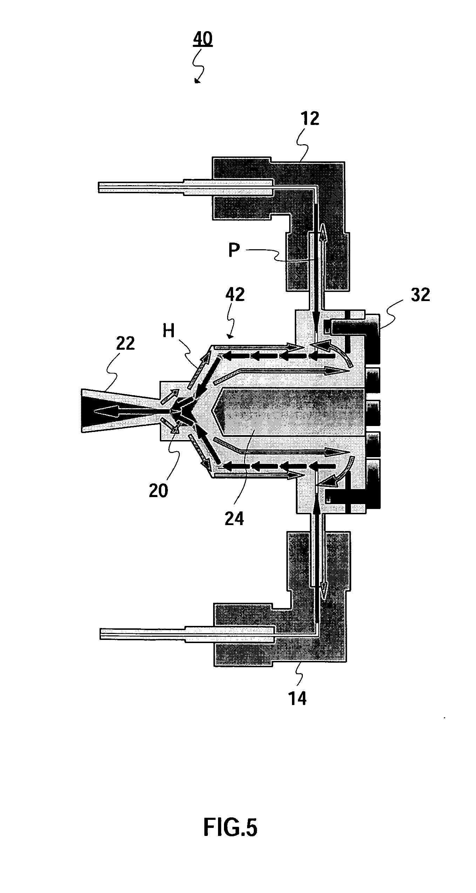

FIG.4 shows an analysis result of flows of a propellant and heat in solar thermal thruster 40. FIG.5 shows an ideal heat flow in solar thermal thruster 40 shown in FIG.2. In FIGs.4 and 5, the arrow indicated by "H" expresses a heat flow and the arrow indicated by "P" expresses a propellant flow.

As shown in FIG.4, in view of heat transfer, the temperature in plenum chamber 20 decreases as a result of the fact that a position of nozzle 22 is away from cavity 24 which is a heating surface and that, when the propellant expands in nozzle 22, the propellant absorbs heat from nozzle 22 and cools nozzle 22. That is, the expanded propellant absorbs the heat of nozzle 22 and cools nozzle 22, and therefore the heat of plenum chamber 20 flows into nozzle 22, and the temperature in plenum chamber 20 decreases. Further, heat is released outside by radiant heat transfer from nozzle 22, the heat in plenum chamber 20 flows into nozzle 22, and this also decreases the temperature in plenum chamber 20.

According to the experiment result and the numerical analysis result by the inventors, it is found that the structure of the conventional solar thermal thruster cannot realize an optimum temperature distribution for heating a propellant and a heat flow for heating the propellant. This fact is not limited to the solar thermal thruster, but is also applied to a resistojet using a heater (for example, a heating wire heater) in a cavity as a heat source.

Such phenomenon is largely different from a normal thruster utilizing a chemical reaction. In the normal thruster utilizing the chemical reaction, the temperature of the propellant is higher than the thruster, and, even when the propellant expands in the nozzle and its temperature decreases, the temperature of the propellant is higher than the nozzle. The temperature of a propellant is likely to be higher than a heat resistance temperature of the nozzle, and in such cases, it is necessary to cool the nozzle. That is, there is a significant difference that, in a normal thruster utilizing a chemical reaction, heat flows from the propellant toward the thruster, on the other hand, in a heat transfer thruster which heats a propellant from outside, heat flows from the thruster toward the propellant.

The present invention is accomplished in view of the above, and it is an object of the present invention to provide a heat transfer thruster that makes it possible to realize an optimum temperature distribution for heating a propellant and improve performance of the thruster without complicating the structure.

### Means for Solving the Problem

A heat transfer thruster of the present invention that obtains a thrust by heating a propellant from outside to a high temperature and a high pressure and jetting out the propellant from a nozzle, employs a configuration including: the nozzle that is provided at a propellant outlet; and a heating section that directly heats the nozzle.

A heat transfer thruster of the present invention employs a configuration including: a plenum chamber that is filled with a supplied propellant and accumulates the propellant; a plug nozzle section that jets out the propellant accumulated in the plenum chamber; and a heating section that heats the plenum chamber and the plug nozzle section using provided heat source.

### Advantageous Effect of the Invention

According to the present invention, it is possible to realize an optimum temperature distribution for heating a propellant and improve performance of the thruster without complicating the structure.

### Brief Description of Drawings

FIG.1 is a schematic view showing one example of a structure of a conventional heat transfer thruster;
FIG.2 is a schematic view showing the one example of the structure of a conventional solar thermal thruster;
FIG.3 shows one example of a numerical analysis result of a temperature distribution of the solar thermal thruster shown in FIG.2;
FIG.4 shows an analysis result of the heat flow in the solar thermal thruster shown in FIG.2;
FIG.5 shows an ideal heat flow in the solar thermal thruster shown in FIG.2;
FIG.6 is a schematic view showing a structure of a heat transfer thruster according to Embodiment 1 of the present invention;
FIG.7 is a schematic view showing one example of a structure where the heat transfer thruster shown in FIG.6 is applied to the solar thermal thruster;
FIG.8 shows one example of a numerical analysis result of a temperature distribution of the solar thermal thruster shown in FIG.7;
FIG.9 shows an analysis result of the heat flow in the solar thermal thruster;
FIGs. 10 are schematic views showing structures of heat transfer thrusters according to Embodiment 2 of the present invention, FIG.10A shows a case where a heater is provided to outer periphery of a nozzle, FIG.10B shows a case where a heater is provided inside the nozzle, and FIG.10C shows a case where heaters are provided inside the nozzle and inside the thruster body;
FIG.11 is a schematic view showing a structure of a heat transfer thruster according to Embodiment 3 of the present invention;
FIG.12 is a schematic view showing one example of a structure where the heat transfer thruster shown in FIG.11 is applied to a solar thermal thruster;
FIG.13 shows one example of a numerical analysis result of a temperature distribution of the solar thermal thruster shown in FIG.12;
FIG.14 shows an analysis result of the heat flow in the solar thermal thruster shown in FIG.12; and
FIG.15 shows a comparison between a temperature distribution of a heat transfer thruster using a bell-shaped nozzle and a temperature distribution of a heat transfer thruster using a plug nozzle.

### Best Mode for Carrying Out the Invention

Embodiments of the present invention will be described in detail with reference to the drawings.

The present inventors found that, in order to improve the performance of the heat transfer thruster, it is necessary to realize an optimum temperature distribution for heating a propellant. Further, the inventors found that, in order to realize an optimum temperature distribution, it is necessary to heat a nozzle. Moreover, the inventors found that, in order to heat the nozzle without complicating the structure, it is necessary to optimize the shape of the nozzle.

According to the first aspect of Embodiment 1 of the present invention, a plug nozzle (including a spike nozzle and an aerospike nozzle) is employed as a nozzle, a hollow section is formed in the plug nozzle, and the hollow section is used as a heating section.

As a result of subsequent researches, the inventors found that, in order to realize an optimum temperature distribution for heating a propellant, it is extremely effective to directly heat a plenum chamber and the nozzle at the same time. Further, the inventors found that, in order to directly heat the plenum chamber and the nozzle at the same time, it is necessary to optimize the shape of the nozzle and the structure of a heat-input mechanism into the plenum chamber and the nozzle.

According to the second aspect of Embodiment 2 of the present invention, a plug nozzle (including a spike nozzle and an aerospike nozzle) is employed as the nozzle and, by heating the plenum chamber and the plug nozzle through a cavity formed inside the heat transfer thruster, the optimum temperature distribution of the heat transfer thruster is realized. To be more specific, a heat source is provided in the cavity, the plenum chamber is heated using the heat source, and the nozzle is also heated to such a degree that the temperature of the plenum chamber does not decrease as a result of cooling the nozzle due to the expansion of a propellant. Thus, the temperature of the heat transfer thruster always becomes higher than the temperature of the propellant, and the temperature of the propellant is the highest in the plenum chamber and decreases toward a propellant inlet and toward the downstream of the plug nozzle. In other words, the temperature distribution of the propellant is the highest in the plenum chamber, and, becomes lower in proportion to a distance from the plenum chamber.

First, a principle of the present invention will be described.

As described above, in the heat transfer thruster, the propellant is heated from outside. Therefore, in order to efficiently heat the propellant, it is assumed necessary to realize a temperature distribution where, based on the idea of the countercurrent, the temperature is the highest in the plenum chamber, becomes lower toward the propellant inlet and becomes the lowest at the propellant inlet so that the temperature of the heat transfer thruster is always higher than the temperature of the propellant. By inputting heat into the propellant from the nozzle, an optimum temperature distribution based on the idea of the countercurrent is realized, and the performance of the heat transfer thruster is improved.

The inventors verified improvement in the performance by inputting heat to the propellant from the nozzle.

Table 1 shows a simulation result of values of thrust and specific impulse when heat is inputted into the propellant from the nozzle and when heat is not inputted. Here, upon calculation, a flow rate of the propellant is 0.1 g/min, the temperature in the plenum chamber is 373 K (100°C) and an amount of heat input is about 3 W. The temperature of the nozzle is 353 K, heat transfer coefficient of the propellant in the nozzle is 100 W/ (m²· k), and polytropic index is 1.13.

**[Table 1]**

| | Thrust [mN] | Specific impulse Isp [s] |
|---|---|---|
| Heat is not inputted from nozzle | 1.8 | 112 |
| Heat is inputted from nozzle | 3.4 | 216 |

As shown in Table 1, when heat is not inputted from the nozzle, the thrust is 1.8 mN and the specific impulse is 112 s. In contrast with this, when heat input from the nozzle is taken into consideration, the thrust is 3.4 mN, the specific impulse is 216 s, and the performance is significantly improved.

Thus, it is found that, in the heat transfer thruster, heating a propellant is effective in the nozzle to improve the performance. From this fact, in the heat transfer thruster, it is considered that the performance can be improved by heating the nozzle.

Theoretically, when the heat input amount is Qᵢₙ and the propellant flow rate is m, the influence of the heat input from the nozzle is in proportion to Qᵢₙ/m, and therefore, when this parameter is higher, improvement in the performance is more effective. When a difference between the nozzle temperature and the propellant temperature is greater, this Qᵢₙ becomes higher, therefore, it is preferable to keep the temperature of the nozzle high. However, in the conventional heat transfer thruster, structurally heat is hardly transferred to the nozzle (see FIG.4) and the temperature of the nozzle is close to the temperature of the propellant (see FIG.3), and therefore the effect of improvement in the performance becomes small. Further, even when the propellant flow rate increases and m increases, the effect of improvement in the performance becomes small.

The result shown in Table 1 shows improvement in the performance by applying heat from the nozzle in the heat transfer thruster. In the heat transfer thruster, when there is a temperature gradient, heat is released structurally due to the heat transfer of the thruster, and it is difficult to locally keep the thruster temperature high. Therefore, this idea of making it possible to, by utilizing the heat input from the nozzle, prevent cooling of the nozzle and exhibit high performance while keeping the high temperature in plenum chamber 20 is extremely effective for improving the performance of the heat transfer thruster. This idea is totally new finding based on the experiment and numerical analysis carried out by the present inventors.

In the case of a normal thruster utilizing combustion, an amount of heat entering into the nozzle from the propellant is only a portion of energy of the propellant, and therefore the propellant is handled as adiabatically changing (that is, heat is not released from the propellant to the nozzle). The new idea of the present inventors is different from the general handling in the normal thruster utilizing combustion (the propellant adiabatically changes in the nozzle).

According to the above observation, it is found that, in the conventional heat transfer thruster, structurally, the temperature in the plenum chamber decreases due to cooling of the nozzle, and the temperature distribution of the heat transfer thruster suitable for heating the propellant could not be obtained. It is also found that, in order to improve the performance of the heat transfer thruster, it is effective to actively apply heat to the propellant from the nozzle, that is, to heat the nozzle (keeping the nozzle at high temperature). It is found that, in order to improve the performance of the heat transfer thruster, it is especially effective to actively apply heat to the propellant from the plenum chamber and the nozzle. That is, it is found that it is effective to actively heat the plenum chamber and the nozzle, increase the difference between the temperatures of the plenum chamber and the nozzle and the temperature of the propellant and accelerate the heat input to the propellant.

Several embodiments will be described. The embodiments are different from each other in methods of heating the nozzle, and structures (including shapes and dispositions) of the heat-input mechanism for the plenum chamber and the nozzle.

### (Embodiment 1)

A case will be described with Embodiment 1 where, as a method of heating the nozzle, a so-called plug nozzle is used, and the plug nozzle is heated through a cavity formed inside the heat transfer thruster.

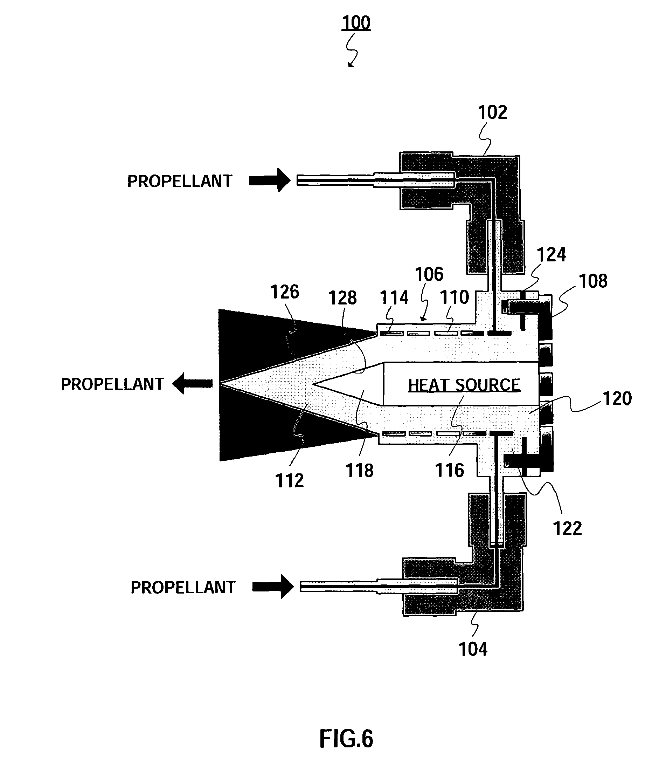

FIG.6 is a schematic view (sectional view) of a structure of a heat transfer thruster according to Embodiment 1 of the present invention.

FIG.6 shows heat transfer thruster 100 that roughly has two pipes 102 and 104, thruster body 106 and connecting bolts 108. In thruster body 106, spiral channel 110 is formed inside an outer periphery, plug nozzle 112 is formed in the propellant outlet, plenum chamber 114 is formed between channel 110 and the propellant outlet, and cavity 116 is formed in a central part of thruster body 106. Plug nozzle 112 is integrally formed with thruster body 106 by coupling (coupling by welding or screw) or integral molding. In this embodiment, hollow section 118 is formed in plug nozzle 112. Hollow section 118 in plug nozzle 112 forms a part of cavity 116 of thruster body 106. That is, in this structure, cavity 116 in thruster body 106 is extended into plug nozzle 112. In this structure, only cavity 116 becomes deep, and therefore the structure does not become complicated. A heat source (for example, sunlight or heater) is provided to cavity 116 in thruster body 106. As will be described later, hollow section 118 in plug nozzle 112 functions as a heating section that heats the nozzle by heat supplied from the heat source. Thruster body 106 is formed with inner body 120 and outer body 122, and adopts a configuration where gasket 124 is sandwiched between inner body 120 and outer body 122, and inner body 120 and outer body 122 are sealed by tightening connecting bolts 108.

In heat transfer thruster 100, a propellant flows into thruster body 106 through two pipes 102 and 104, flows toward the nozzle side through channel 110 formed in thruster body 106, while being heated by thruster body 106 which is heated by the heat source, reaches plenum chamber 114 before the nozzle, and then is jetted out along outer wall 126 of plug nozzle 112 from the propellant outlet. At that time, in heat transfer thruster 100, heat input from the heat source is directly transferred to the nozzle through inner wall 128 of plug nozzle 112. That is, hollow section 118 of plug nozzle 112 functions as the heating section which heats the nozzle.

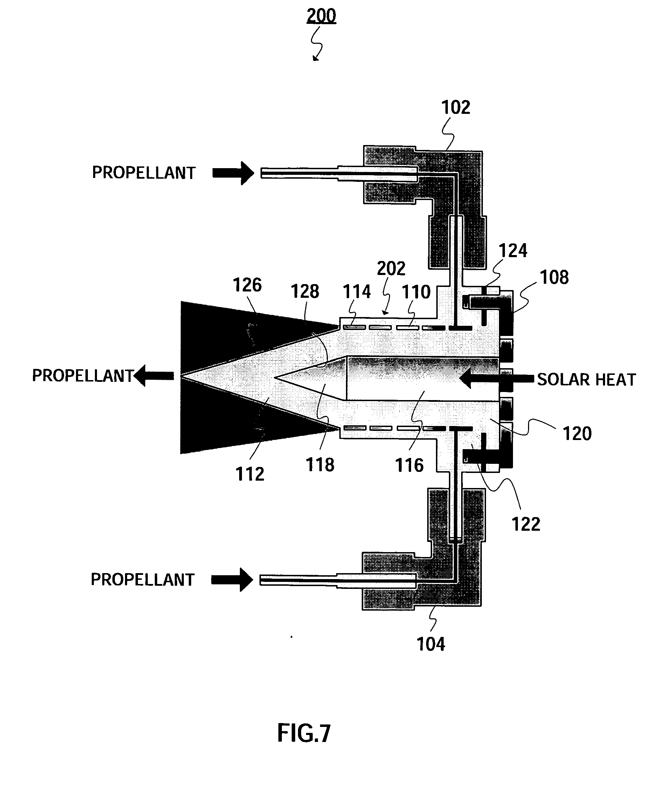

FIG.7 is a schematic view (sectional view) showing a structure of a solar thermal thruster having plug nozzle 112 as one example of the heat transfer thruster shown in FIG.6. This solar thermal thruster 200 has the same basic configuration as solar thermal thruster 100 shown in FIG.6, the same components are assigned the same reference numerals and will not be described.

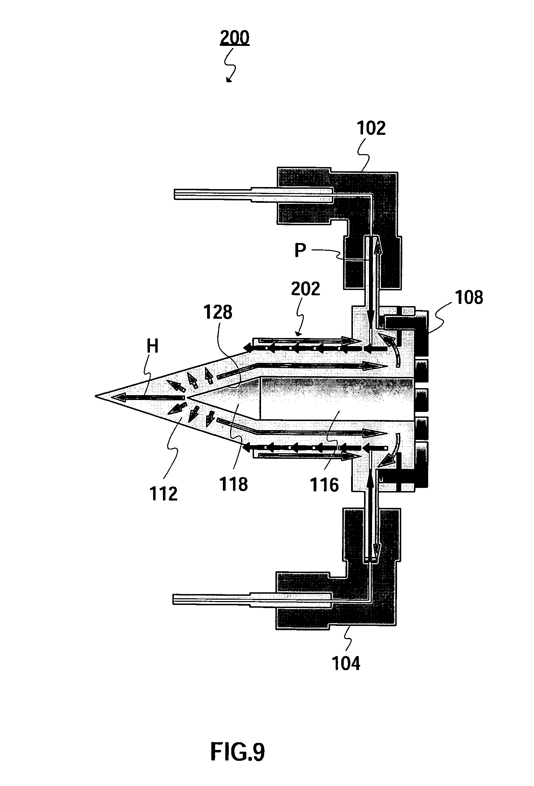

In this solar thermal thruster 200, by collecting sunlight in cavity 116 by a solar collector mirror (not shown) provided outside thruster body 202, thruster body 202 is heated. At that time, in solar thermal thruster 200, the heat input from the sunlight is directly transferred to the nozzle through inner wall 128 of plug nozzle 112 (see FIG.9 described later).

In this way, according to this embodiment, the nozzle of heat transfer thruster 100 (solar thermal thruster 200) is changed to plug nozzle 112 from bell-shaped or cone-shaped nozzle 22 (see FIGs.1 and 2) used in conventional heat transfer thruster 10 (solar thermal thruster 40), hollow section 118 is formed in plug nozzle 112, and hollow section 118 functions as the heating section. In this structure, as described above, cavity 116 of thruster body 106 (202) is extended into the nozzle, only cavity 116 becomes deep, and the structure does not become complicated. In this structure, the heating section exists in the nozzle, and the nozzle can be heated without winding a heating wire around the nozzle.

The present inventors carried out a heat transfer analysis of heat transfer thruster 100 having plug nozzle 112 based on the experiment and numerical analysis. Here, a case will be described as one example where solar thermal thruster 200 having plug nozzle 112 uses water as the propellant.

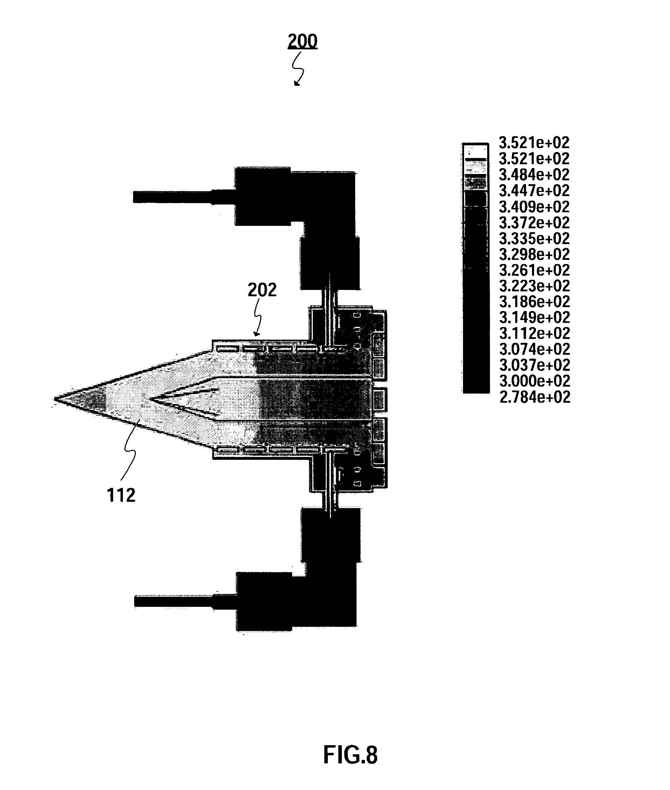

FIG.8 shows one example of a numerical analysis result of the temperature distribution of solar thermal thruster 200. FIG.9 shows an analysis result of the heat flow in solar thermal thruster 200 with respect to the propellant. A unit of numbers in FIG.8 is K (Kelvin).

As the result of the analysis, in solar thermal thruster 200 having plug nozzle 112, as shown in FIG.8, it can be found that an optimum temperature distribution for heating the propellant is realized where the temperature is high at the nozzle portion and decreases toward the propellant inlet.

This can easily be understood from the heat flow in solar thermal thruster 200 shown in FIG.9. That is, in this case, as shown in FIG.9, sunlight irradiates the deepest portion of cavity 116 (that is, inner wall 128 of plug nozzle 112), and heats the nozzle portion highest. In conventional solar thermal thruster 40, as described above, structurally, the heat input from the sunlight to cavity 24 is hardly transferred to nozzle 22 (see FIG. 4). In solar thermal thruster 200 according to this embodiment, structurally, the heat input from the sunlight to cavity 116 is directly transferred to nozzle 112, the nozzle is kept at high temperature, and the heat input from the sunlight can efficiently be transferred to plenum chamber 114 and thus to the propellant. In this case, as shown in FIG. 9, it is found that the heat flow in solar thermal thruster 200 assumes the form of an ideal countercurrent in which heat flows from the downstream to the upstream in the thruster. In FIG.9, the arrow indicated by "H" expresses a heat flow, and the arrow indicated by "P" expresses a flow of a propellant.

The above description is not limited to solar thermal thruster 200, and can also be applied to a resistojet using a heater (for example, heating wire heater) in the cavity as the heat source.

In this way, according to this embodiment, by employing plug nozzle 112 as the nozzle, forming hollow section 118 in plug nozzle 112 and directly heating the nozzle using hollow section 118 as the heating section, it is possible to heat the nozzle without complicating the structure and realize an optimum temperature distribution for heating the propellant from outside where the temperature is high in the plenum chamber and decreases toward the propellant inlet, and therefore, it is possible to improve performance of the thruster .

It is known that, when the plug nozzle is used for a rocket which reaches space from the earth, the plug nozzle has an advantage of optimizing the expansion of a propellant without changing the shape of the nozzle according to the altitude. However, the nozzle surface is exposed to the high temperature propellant (combustion gas), and a cooling mechanism is essential, which makes the structure complicated. Therefore, the plug nozzle is not yet in the actual use.

That is, typically, a plug nozzle differs from a normal bell-shaped nozzle, and the nozzle does not have a skirt shape and has a center object (plug) having a picked tip end. The bell-shaped nozzle causes excessive expansion when the altitude is lower than a design altitude and causes insufficient expansion when the altitude is higher than the design altitude, and therefore, the bell-shaped nozzle cannot realize an optimum expansion of a propellant. The plug nozzle is devised to improve this point. An outer side of the plug nozzle is not surrounded by a wall surface. Thus, a propellant can optimally expand with respect to the outside atmospheric pressure (that is, at any altitude). In a spike nozzle or an aerospike nozzle, which is a sort of the plug nozzle, a tip end of a center object (plug) is cut off, and fluid is substituted for the center object, so as to reduce the weight of the nozzle and the thermal load.

However, as in a normal thruster utilizing combustion, when the temperature of the propellant becomes higher than the temperature of the nozzle, the plug nozzle has such a shape where heat concentrates, and therefore the plug nozzle is likely to be locally highly heated and damaged by the high temperature propellant. In order to avoid this, it is necessary to cool the plug nozzle. However, the plug nozzle has such a shape surrounded by the high temperature propellant, and therefore the plug nozzle cannot be cooled from outside. Therefore, the plug nozzle must be cooled from inside of the nozzle. In this case, there is a drawback that the structure becomes complicated. This is the serious problem, and the plug nozzle is not yet in the actual use. As described above, the advantage of the plug nozzle is to optimally expand the propellant with respect to the outside atmospheric pressure (that is, at any altitude). This is exhibited most in the atmosphere, the propellant is insufficiently expanded no matter how large the opening ratio is set in vacuum, and the performance is the same as the bell-shaped nozzle, therefore, it is not considered to use the nozzle in vacuum.

Although the plug nozzle is not yet in the actual use due to the above various problems such as cooling, in the heat transfer thruster such as the solar thermal thruster which heats the propellant from outside, the temperature of the propellant is lower than the nozzle, and the nozzle is always cooled by the propellant, so that the plug nozzle is thermally safe, in addtion, it is not necessary to provide a cooling device, and the structure does not become complicated.

In this embodiment, based on the new finding of the present inventors, the plug nozzle is used not for the original purpose of the plug nozzle (optimum expansion of a propellant) but for realizing an optimum temperature distribution where the temperature is the highest in the plenum chamber and the temperature decreases toward the propellant inlet without complicating the structure.

By configuring the heat transfer thruster using such a plug nozzle, the following new advantages can be obtained.

1) By compensating the drawback of the temperature distribution in the conventional heat transfer thruster where heat is released from the nozzle to the propellant and heat is thereby released from the plenum chamber to the nozzle, it is possible to realize an ideal temperature distribution of the countercurrent (see FIGs.8 and 9).

2) It is possible to improve performance by keeping the high temperature of the nozzle and inputting heat to the propellant from the nozzle through the plenum chamber.

3) It is possible to compensate the drawback of the heat transfer thruster that cannot locally achieve the high temperature by the above effect of improvement in performance. That is, by effectively using heating to the propellant in the plenum chamber and the nozzle, it is possible to exhibit the high performance without keeping the temperature of the entire thruster so high. This roughly means that the performance upon heating to about 2000 K can be exhibited with the temperature of the propellant kept at about 1000 K, and this newly shows usefulness of the heat transfer thruster.

4) It is possible to overcome the problem of high heat load of the nozzle which is the drawback of the conventional plug nozzle by actively inputting heat to the propellant.

### (Embodiment 2)

A case will be described with Embodiment 2 where a heater is used as a heating method of the nozzle.

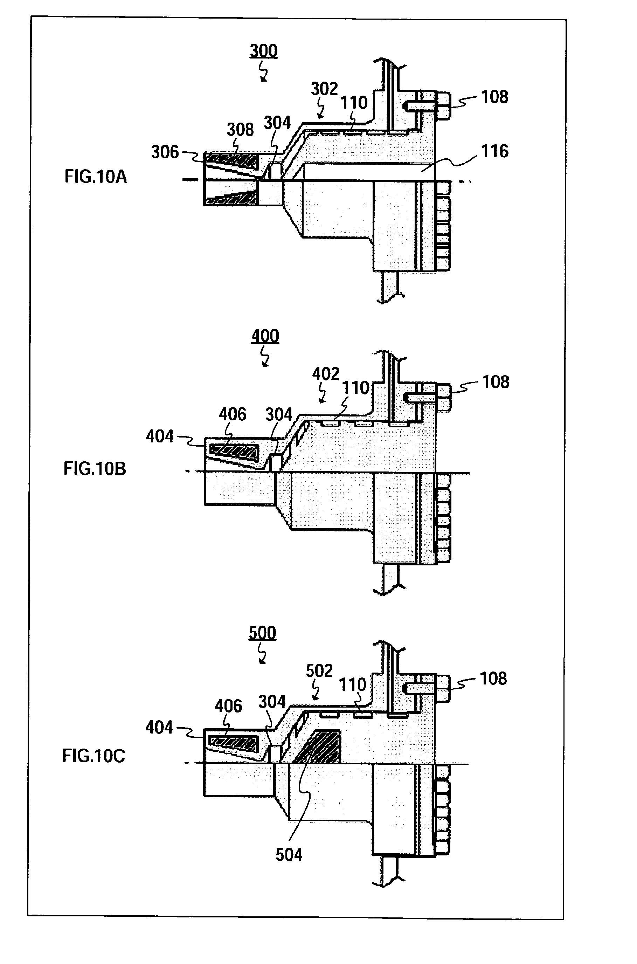

FIGs.10A to 10C are schematic views showing structures of heat transfer thrusters according to Embodiment 2 of the present invention. FIG. 10A shows the case where a heater is provided on an outer periphery of the nozzle, FIG.10B shows the case where a heater is provided inside the nozzle, and FIG.10C shows the case where heaters are provided inside the nozzle and inside the thruster body respectively. Heat transfer thrusters 300, 400 and 500 shown in FIGs.10A to 10C have the same basic configurations as in heat transfer thruster 100 shown in FIG.6, and the same components are assigned the same reference numerals and will not be described.

Heat transfer thrusters 300, 400 and 500 shown in FIGs.10A to 10C have the same structure as in conventional heat transfer thruster 10 shown in FIG.1 in that the thrusters have the bell-shaped or cone-shaped nozzles. However, thruster bodies 302, 402 and 502 have slightly different structures from thruster body 106 shown in FIG. 6. To be more specific, plenum chambers 304 are located at central parts of thruster bodies 302, 402 and 502. This is because that when the bell-shaped or cone-shaped nozzle is used, propellant outlets are located at central parts of thruster bodies 302, 402 and 502.

Heat transfer thruster 300 shown in FIG. 10A has heater 308 on an outer periphery of bell-shaped or cone-shaped nozzle 306 for heating nozzle 306. Heater 308 includes a heating wire wound around an outer periphery of nozzle 306. Here, channel 110, plenum chamber 304 and cavity 116 are provided in thruster body 302. Therefore, in this case, the heating source includes a heat source (for example, sunlight) provided to cavity 116, and heater 308.

In heat transfer thruster 400 shown in FIG.10B, in order to heat bell-shaped or cone-shaped nozzle 404, heater 406 is built inside nozzle 404. Heater 406 includes a heating wire accommodated in an accommodating section formed inside nozzle 404. Thruster body 402 is provided with only channel 110 and plenum chamber 304, and is not provided with cavity 116. Therefore, in this case, the heating source includes only heater 406.

In heat transfer thruster 500 shown in FIG.10C, as in heat transfer thruster 400 shown in FIG.10B, in order to heat nozzle 404, heater 406 is built in bell-shaped or cone-shaped nozzle 404. Heater 406 includes a heating wire accommodated in the accommodating section formed in nozzle 404. Another heater 504 is built in thruster body 502. Therefore, in this case, the heating source includes two heaters 406 and 504.

According to this embodiment, the nozzle is heated using the heater, and therefore the structure is slightly more complicated than that of Embodiment 1 using the plug nozzle. However, as in Embodiment 1, it is possible to realize an optimum temperature distribution for heating the propellant and improve the performance of the heat transfer thruster.

As a method of heating a nozzle, in addition to the method of using the plug nozzle (Embodiment 1) and the method of using the heater (Embodiment 2), a method of providing a member for connecting a cavity and a nozzle so as to accelerate the heat transfer may be possible.

### (Embodiment 3)

In Embodiment 3, as a method of heating the nozzle, as in the case of Embodiment 1, a plug nozzle is heated through a cavity formed inside the heat transfer thruster. In this embodiment, the cavity has a structure (including a shape and position) suitable for directly heating the plenum chamber and the nozzle at the same time. An aspect of Embodiment 1 shown in FIG.6 can be considered as one of specific examples to which this embodiment is applied.

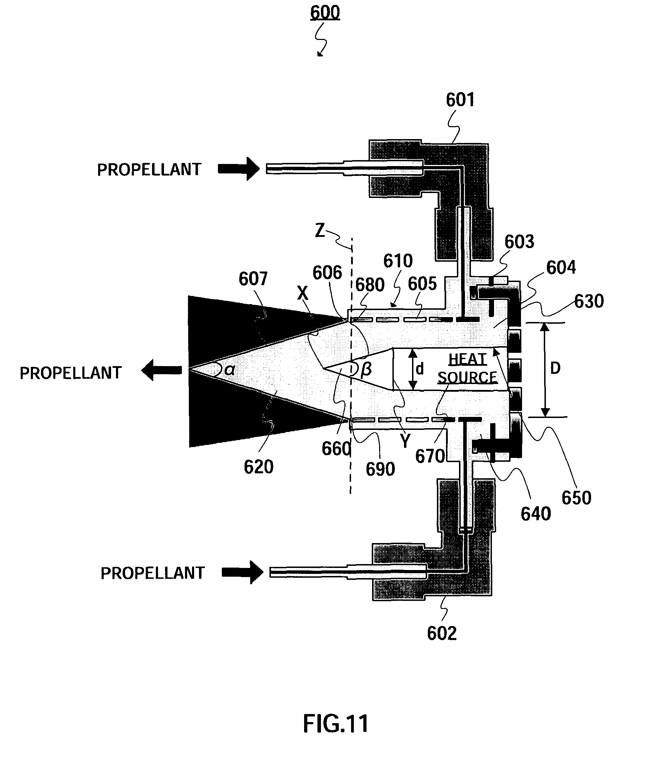

FIG.11 is a schematic view (sectional view) showing the structure of the heat transfer thruster according to Embodiment 3 of the present invention.

Heat transfer thruster 600 shown in FIG.11 has two pipes 601 and 602 for supplying a propellant to thruster body 610, thruster body 610 and plug nozzle 620. Thruster body 610 and plug nozzle 620 are integrally formed by coupling (for example, welding or screwing) or integral molding.

Thruster body 610 is formed with inner body 630 and outer body 640 and adopts a configuration where gasket 603 is sandwiched between inner body 630 and outer body 640, and inner body 630 and outer body 640 are sealed by tightening connecting bolt 604.

Spiral channel 605 for supplying a propellant from two pipes 601 and 602 to plenum chamber 680 is formed on an outer periphery of inner body 630.

At a terminal end of channel 605 of inner body 630, plenum chamber 680 is formed which is filled with the propellant supplied through channel 605 and accumulates the propellant. Plenum chamber 680 is heated by cavity 650 described later. It is preferable that the temperature in plenum chamber 680 is set as high as possible within a range not exceeding a heat-resistant temperature.

A flow rate of the propellant can be changed by changing an area of an outlet of plenum chamber 680. It is preferable that the flow rate of the propellant is set to such a value that all the propellant is evaporated at a propellant outlet or immediately before the propellant outlet formed at a boundary between thruster body 610 and plug nozzle 620.

The propellant accumulated in plenum chamber 680 is jetted out by plug nozzle 620 from the propellant outlet formed at the boundary between thruster body 610 and plug nozzle 620 along outer wall 607 of plug nozzle 620. Plug nozzle 620 has, for example, a conical shape. Here, a vertex angle of its plug nozzle 620 is expressed as α, and a diameter of a bottom surface thereof is expressed as D. Plug nozzle 620 is a concept including a spike nozzle and an aerospike nozzle where a tip end of plug nozzle 620 is cut off and fluid is substituted for a center object.

Inside thruster body 610 and plug nozzle 620 which are integrally formed, cavity 650 is formed as a heating section for heating plug nozzle 620 and plenum chamber 680. Cavity 650 is formed with conical first hollow section 660 and columnar second hollow section 670, for example. First hollow section 660 and second hollow section 670 are continuously connected to each other and are in communication with each other. That is, as in Embodiment 1, first hollow section 660 can be considered as a part of a structure where second hollow section 670 is extended into plug nozzle 620. In this structure, only second hollow section 670 becomes deep, and the structure does not become complicated. An end of second hollow section 670 (end opposite from plug nozzle 620) is in communication with outside.

Here, a vertex angle of conical first hollow section 660 is expressed as β, and a diameter of a bottom surface of first hollow section 660 is expressed as d. A diameter of a bottom surface of columnar second hollow section 670 is expressed as d.

Cavity 650 accumulates a heat source supplied from sunlight and a heater, and heats plug nozzle 620 and plenum chamber 680. This heating is carried out mainly by heat input from inner wall 606 of first hollow section 660 to plug nozzle 620 and plenum chamber 680.

In this embodiment, by optimizing the shapes and positions of first hollow section 660 and second hollow section 670 constituting cavity 650, it is possible to control heating of plug nozzle 620 and plenum chamber 680 so as to realize an optimum temperature distribution where the temperature in plenum chamber 680 becomes the highest. Conditions thereof will be described below.

It is preferable that vertex angle α of plug nozzle 620 and vertex angle β of first hollow section 660 are in a range of 0 (degree) to 180 (degrees). A part or all of first hollow section 660 including vertex X may protrude toward second hollow section 670. That is, first hollow section 660 may be formed into such a shape that a part of first hollow section 660 including vertex X is folded back toward second hollow section 670 so that vertex X of folded back first hollow section 660 is located inside second hollow section 670.

A rate (D/d) of diameter D of the bottom surface of plug nozzle 620 to diameter d of the bottom surface of first hollow section 660 is preferably in a range of 1.0 to 10.0, and more preferably in a range of 1.0 to 5.0.

It is preferable that vertex X of first hollow section 660 is located inside plug nozzle 620. It is preferable that connected portion Y between first hollow section 660 and second hollow section 670 is located outside plug nozzle 620, that is, inside thruster body 610. That is, it is preferable that vertex X of first hollow section 660 is located closer to plug nozzle 620 than boundary line Z between thruster body 610 and plug nozzle 620. Further, connected portion Y between first hollow section 660 and second hollow section 670 is located closer to thruster body 610 than boundary line Z between thruster body 610 and plug nozzle 620.

As described above, by optimizing the shapes and the positions of first hollow section 660 and second hollow section 670 constituting cavity 650, it is possible to preferably heat plug nozzle 620 and plenum chamber 680, and realize an ideal temperature distribution of heat transfer thruster 600 where the temperature in plenum chamber 680 becomes the highest.

First hollow section 660 and second hollow section 670 constituting cavity 650 need not always satisfy all of the above conditions. For example, vertex X of first hollow section 660 may be located on the side of thruster body 610, and connected portion Y between first hollow section 660 and second hollow section 670 may be located inside plug nozzle 620. In these cases also, the structure shows a certain effect for the heat input to plug nozzle 620 and plenum chamber 680.

Cavity 650 may be manufactured as a heating section having an integral structure formed with first hollow section 660 and second hollow section 670, or manufactured by coupling separately manufactured first hollow section 660 and second hollow section 670.

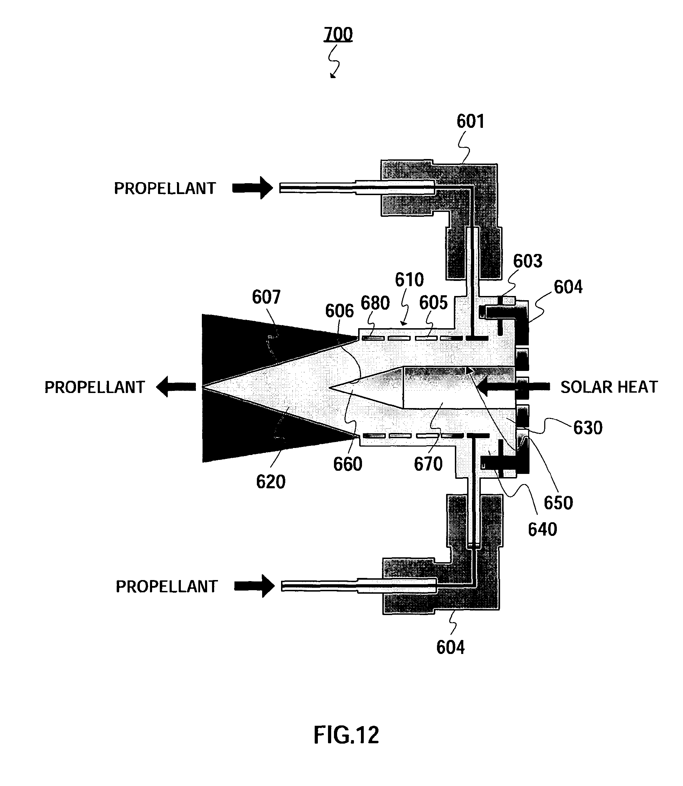

The operation of heat transfer thruster 600 having the above configuration will be described using FIG.12.
FIG.12 is a schematic view showing one example of a structure where the heat transfer thruster shown in FIG. 11 is applied to the solar thermal thruster. Solar thermal thruster 700 has the same basic configuration as in solar thermal thruster 600 shown in FIG.11, and the same components are assigned the same reference numerals and will not be described.

In solar thermal thruster 700, by collecting sunlight in cavity 650 by the solar collector mirror (not shown) provided outside thruster body 610, thruster body 610 is heated. At that time, in solar thermal thruster 700, the heat input from the sunlight is transferred directly to both plug nozzle 620 and plenum chamber 680 through cavity 650. This will be described specifically below.

The heat source collected by the solar collector mirror is accumulated in cavity 650 formed with first hollow section 660 and second hollow section 670.

The propellant supplied from the propellant inlet (not shown) flows into thruster body 610 through two pipes 601 and 602. The propellant which flows into thruster body 610 is supplied to plenum chamber 680 through spiral channel 605 and accumulated therein.

The propellant accumulated in plenum chamber 680 is jetted out from the propellant outlet formed at the boundary between thruster body 610 and plug nozzle 620 along outer wall 607 of plug nozzle 620.

At that time, plug nozzle 620 and plenum chamber 680 are heated by cavity 650 formed with first hollow section 660 and second hollow section 670. Although, in plug nozzle 620, the propellant is expanded and cooled, a decrease of the temperature of plug nozzle 620 is prevented by inputting to plug nozzle 620 from cavity 650 heat corresponding to the heat transferred from plug nozzle 620 to the propellant. Thus, outflow of heat from plenum chamber 680 to plug nozzle 620 which is caused by the temperature decrease in plug nozzle 620 is not caused. Further, the heat from cavity 650 is also inputted to plenum chamber 680 as in plug nozzle 620, so that it is possible to realize an ideal temperature distribution of the propellant where the temperature is the highest in plenum chamber 680 and becomes lower in proportion to a distance from plenum chamber 680.

The present inventors carried out the heat transfer analysis of heat transfer thruster 600 having plug nozzle 620 based on the experiment and numerical analysis. Here, a case will be described with solar thermal thruster 700 as an example where plug nozzle 620 is provided and water is used as the propellant.

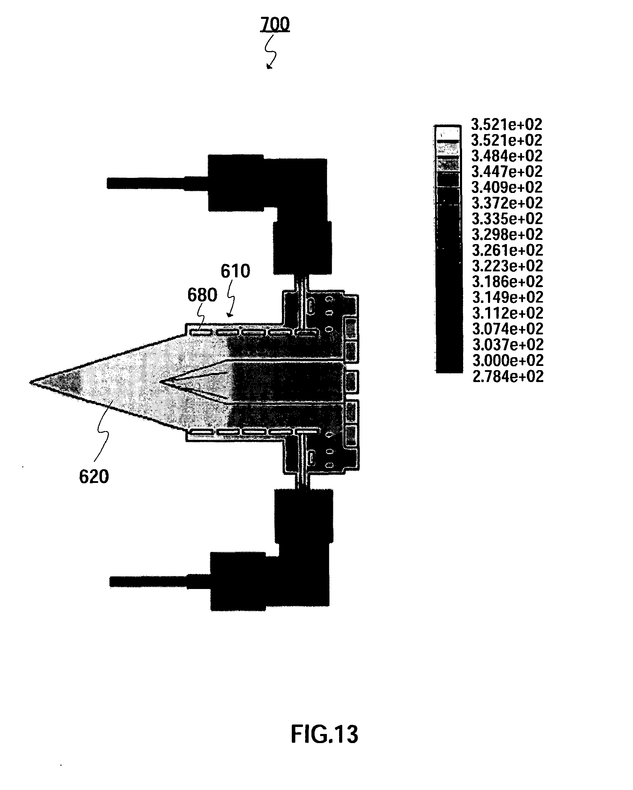

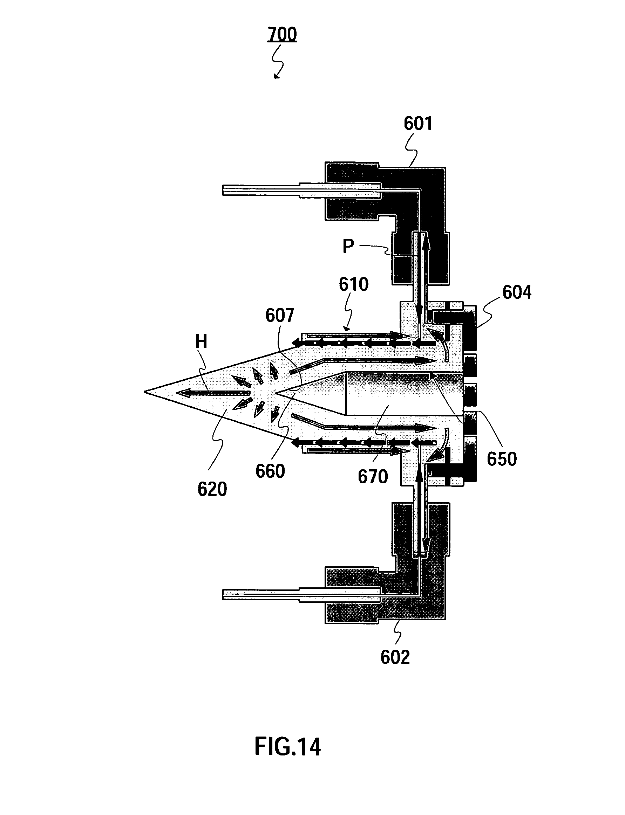

FIG.13 shows one example of a numerical analysis result of the temperature distribution of solar thermal thruster 700 shown in FIG.12. FIG.14 shows an analysis result of the heat flow of solar thermal thruster 700 shown in FIG.12. The unit of numbers in FIG.13 is K (Kelvin). In FIG. 14, the arrow indicated by "H" expresses a heat flow, and the arrow indicated by "P" expresses a propellant flow.

As shown in FIG.13, in solar thermal thruster 700 having plug nozzle 620, it can be found that an optimum temperature distribution for heating the propellant is realized where the temperature is the highest in plenum chamber 680 and becomes lower in proportion to a distance from plenum chamber 680.

This can easily be understood from the heat flow in solar thermal thruster 700 shown in FIG.14. That is, as shown in FIG.14, the sunlight irradiates the inner wall of cavity 650, is accumulated thereon and heats plug nozzle 620 and plenum chamber 680 to the highest temperature. In conventional solar thermal thruster 40, as described above, structurally, the heat input from the sunlight to cavity 24 is hardly transferred to nozzle 22 and plenum chamber 42 (see FIG.2) . However, in solar thermal thruster 700 according to this embodiment, structurally, the heat input from the sunlight to cavity 650 formed with first hollow section 660 and second hollow section 670 is directly transferred to both plug nozzle 620 and plenum chamber 680, so that it is possible to prevent cooling of the nozzle due to expansion of the propellant, keep plenum chamber 680 at the highest temperature and efficiently transfer the heat input from the sunlight to the propellant. In this case, it can be found that the heat flow in solar thermal thruster 700 has an ideal countercurrent flowing shape (see FIG.5) in which heat flows from the downstream to the upstream in the thruster.

This fact is not limited to solar thermal thruster 700, and can also be applied to a resistojet using a heater (for example, heating wire heater) in cavity 650 as the heat source.

In this way, as in Embodiment 1, this embodiment is characterized in that the nozzle which forms the propellant outlet at the boundary between thruster body 610 is plug nozzle 620 instead of bell-shaped or cone-shaped nozzle 22 (see FIGs.1 and 2) used in conventional heat transfer thruster 10 (solar thermal thruster 40).

As described above, it is known that the plug nozzle has an advantage of, when the plug nozzle is used for a rocket which reaches space from the earth, making it possible to optimize the expansion of a propellant without changing the shape of the nozzle according to the altitude. However, the nozzle surface is exposed to the high temperature propellant (combustion gas), and a cooling mechanism is essential, which makes the structure complicated. Therefore, the plug nozzle is not yet in the actual use. Although the plug nozzle is not yet in the actual use, in the heat transfer thruster such as the solar thermal thruster which heats a propellant from outside, even if the plug nozzle is used, the plug is thermally safe since the propellant has lower temperature than the nozzle and the nozzle is always cooled by the propellant, and further, the structure does not become complicated since it is not necessary to provide a cooling device for the plug nozzle. Therefore, in this embodiment, based on the new finding by the present inventors, the plug nozzle is utilized not for the original purpose of the plug nozzle (optimum expansion of propellant) but for realizing an optimum temperature distribution where the temperature is the highest in the plenum chamber and becomes lower toward the propellant inlet without complicating the structure.

This embodiment is characterized in that cavity 650 formed with first hollow section 660 and second hollow section 670 is formed, and cavity 650 functions as a heating section which heats plug nozzle 620 and plenum chamber 680. That is, the heating section exists in plug nozzle 620, and plug nozzle 620 can be heated without winding a heating wire around plug nozzle 620.

By configuring heat transfer thruster 600 using such plug nozzle 620, as in the case of Embodiment 1, the following advantages can be obtained.

1) By compensating the drawback of the temperature distribution in the conventional heat transfer thruster where heat is released from the nozzle to the propellant and heat is thereby released from the plenum chamber to the nozzle, it is possible to realize an ideal temperature distribution of the countercurrent (see FIGs.13 and 14).

2) It is possible to improve performance by inputting heat to the propellant from the nozzle.

3) It is possible to compensate the drawback of the heat transfer thruster that cannot locally achieve high temperature by the above effect of improvement in performance. That is, by effectively using heating to the propellant in the plenum chamber and the nozzle, it is possible to exhibit the high performance without keeping the temperature of the entire thruster so high.
This roughly means that the performance upon heating to about 2000 K can be exhibited with the temperature of the propellant kept at about 1000 K, and this newly shows usefulness of the heat transfer thruster.

4) It is possible to overcome the problem of high heat load of the nozzle which is the drawback of the conventional plug nozzle by actively inputting heat to the propellant.

Although, in this embodiment, for first hollow section 660 and second hollow section 670 constituting cavity 650, first hollow section 660 has the conical shape and second hollow section 670 has the columnar shape, the present invention is not limited to this. For example, first hollow section 660 may have such a shape where its tip end is cut off. That is, by configuring a hollow cavity that makes it possible to heat the nozzle and the plenum chamber using the heat source as the heating section, it is possible to obtain a certain advantage.

As described above, according to this embodiment, by employing plug nozzle 620 as the nozzle and directly heating plug nozzle 620 and plenum chamber 680 using cavity 650 formed with first hollow section 660 and second hollow section 670 formed in plug nozzle 620, it is possible to realize, without complicating the structure, an ideal temperature distribution where the temperature of the heat transfer thruster from the propellant inlet to plenum chamber 680 is always higher than the temperature of the propellant, and the temperature of the propellant is the highest in plenum chamber 680 and becomes lower in proportion to a distance from plenum chamber 680, so that it is possible to improve the performance of the heat transfer thruster.

According to this embodiment, by optimizing the shapes and positions of first hollow section 660 and second hollow section 670 constituting cavity 650, it is possible to readily design the high performance heat transfer thruster.

According to Embodiment 2 utilizing the heater, it is possible to heat the plenum chamber and the nozzle. That is, according to the configurations of heat transfer thrusters 300, 400 and 500 respectively shown in FIGs.10A to 10C, by using the heating section formed with the combination of the heat input from the cavity, the heater provided on the outer periphery of the nozzle, the heater built in the nozzle and the heater built in the thruster body, the plenum chamber and the nozzle are heated, so that, as in this embodiment, it is possible to realize an ideal temperature distribution where the temperature in the plenum chamber is the highest.

As a method of heating the plenum chamber and the nozzle, in addition to the method of using the plug nozzle and the method of using the heater, a method may be possible of providing a member for connecting the cavity and the nozzle so as to accelerate the heat transfer.

### (Comparative Example)

To demonstrate the effects of the present invention, the present inventors carried out simulations of a temperature distribution in the thrusters for the heat transfer thruster using the conventional bell-shaped nozzle (see FIG. 1), and the heat transfer thruster using the plug nozzle of Embodiment 3 (see FIG. 11), respectively. Simulation results will be explained as the comparative example.

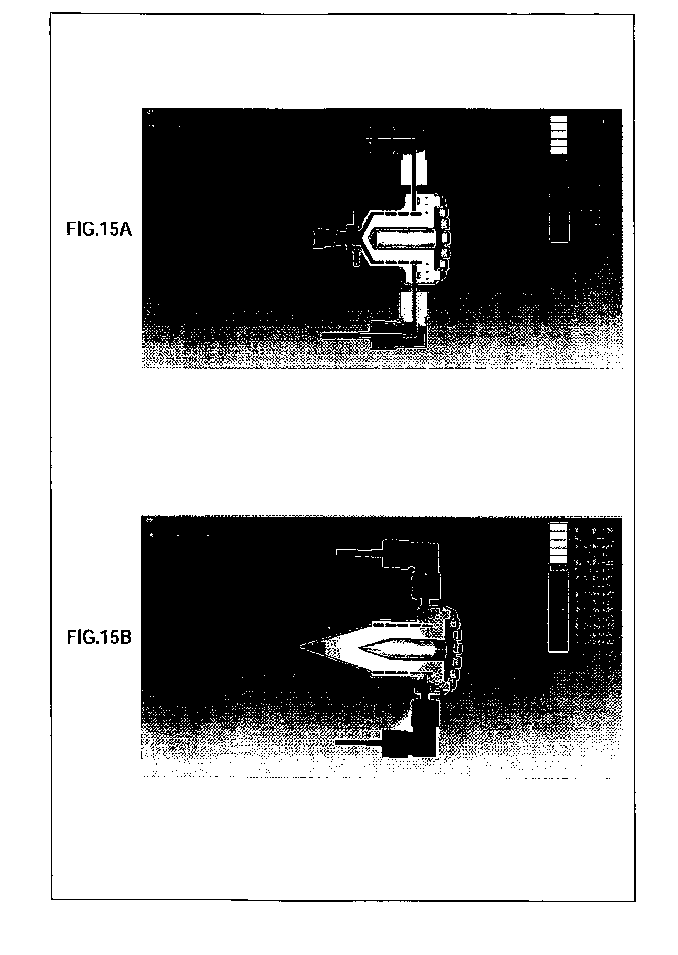

FIG.15A shows one example of a numerical analysis result of the temperature distribution of the heat transfer thruster using the conventional bell-shaped nozzle. FIG. 15B shows one example of a numerical analysis result of the temperature distribution of the heat transfer thruster using the plug nozzle of Embodiment 3.

From FIGs.15A and 15B, it is found that in the heat transfer thruster using the plug nozzle, the temperature in the plenum chamber is higher than a heat transfer thruster using the bell-shaped nozzle, and an ideal temperature distribution is realized. Especially, the nozzle is also heated at the same time with the plenum chamber, and therefore the temperature of the nozzle does not decrease due to the expansion of the propellant. Therefore, heat does not flow from the plenum chamber to the nozzle.

Table 2 shows conditions of the simulation conditions and simulation results in FIGs.15A and 15B. In these simulations, the analysis is carried out under the same heat load condition and boundary condition of the bell-shaped nozzle and the plug nozzle.

**[Table 2]**

| | Bell-shaped nozzle | Plug nozzle | |
|---|---|---|---|
| Temperature in plenum chamber(K) | 311 | 348 | 348 |
| Volume Flow rate (ml/min) | 0.26 | 0.26 | 1.4 |
| Saturation temperature (K) | 311 | 311 | 348 |
| Pressure in plenum chamber (kPa) | 6.34 | 6.71 | 36.1 |
| Thrust (mN) | 4.34 | 4.59 | 24.7 |
| Specific Impulse Isp [s] | 102 | 108 | 108 |

From Table 2, when the volume flow rates are the same (0.26 ml/min), the heat transfer thruster using the plug nozzle has slightly better thrust and specific impulse than the heat transfer thruster using the bell-shaped nozzle, and the performance is slightly improved.

Further, the temperature in the plenum chamber and the saturation temperature when the plug nozzle is used is higher than the temperature in the plenum chamber and the saturation temperature when the bell-shaped nozzle is used, so that it is possible to flow more propellant in the heat transfer thruster using the plug nozzle. Therefore, when a volume flow rate (1.4 ml/min) flows such that the temperature in the plenum chamber and the saturation temperature of the heat transfer thruster using the plug nozzle become equal, the thrust is substantially improved. The specific impulse is a function of only temperature, and the specific impulse does not change almost at all in this case.

The present application is based on Japanese Patent Application No.2005-057632, filed on March 2, 2005, the entire content of which is expressly incorporated by reference herein.

### Industrial Applicability

The heat transfer thruster according to the present invention realizes an optimum temperature distribution for heating a propellant without complicating a structure, has an advantage of improving performance of the thruster, and is useful as a heat transfer thruster applied to a solar thermal propulsion or a resistojet.

## Claims

1. A heat transfer thruster that obtains a thrust by heating a propellant from outside to a high temperature and a high pressure and jetting out the propellant from a nozzle, the heat transfer thruster comprising:
the nozzle that is provided at a propellant outlet; and
a heating section that directly heats the nozzle.

2. The heat transfer thruster according to claim 1, wherein:
the nozzle is a plug nozzle having a hollow section; and
the hollow section is in communication with a cavity section which is formed in a thruster body and to which a heat source is provided, and directly heats the nozzle by heat supplied from the heat source.

3. The heat transfer thruster according to claim 2, wherein:
the nozzle is integrally formed with the thruster body; and
the hollow section has such a structure that the cavity section is extended into the nozzle.

4. The heat transfer thruster according to claim 1, wherein the heat source is sunlight.

5. The heat transfer thruster according to claim 1, wherein the heat source is a heater made up of a heating wire or other heat-generating member.

6. A heat transfer thruster comprising:
a plenum chamber that is filled with a supplied propellant and accumulates the propellant;
a plug nozzle section that jets out the propellant accumulated in the plenum chamber; and
a heating section that heats the plenum chamber and the plug nozzle section using provided heat source.

7. The heat transfer thruster according to claim 6, wherein:
the heating section comprises an integral structure having a conical first hollow section and a columnar second hollow section; and
the first hollow section and the second hollow section are continuously connected to each other.

8. The heat transfer thruster according to claim 7, wherein:
the plug nozzle section comprises a conical shape; and
when a diameter of a bottom surface of the first hollow section is 1, a diameter of a bottom surface of the plug nozzle section is in a range of 1 to 10.

9. The heat transfer thruster according to claim 8, wherein a vertex angle of the plug nozzle section and a vertex angle of the first hollow section are in a range of 0 degree to 180 degrees.

10. The heat transfer thruster according to claim 7, wherein a vertex of the first hollow section is located inside the plug nozzle section.

11. The heat transfer thruster according to claim 7, wherein the bottom surface of the first hollow section is located outside the plug nozzle section.

12. The heat transfer thruster according to claim 7, wherein a connected portion between the first hollow section and the second hollow section is located at a position where a temperature in the plenum chamber becomes highest in the heat transfer thruster.

13. The heat transfer thruster according to claim 7, wherein a vertex of the first hollow section is located at a position where a temperature in the plenum chamber becomes highest in the heat transfer thruster.

14. The heat transfer thruster according to claim 6, wherein the heat source is sunlight.

15. The heat transfer thruster according to claim 6, wherein the heat source is a heater made up of a heating wire or other heat-generating member.
